# EUROPÄISCHE PATENTSCHRIFT

(11) **EP 2 247 850 B1**
(45) Veröffentlichungstag und Bekanntmachung des Hinweises auf die Patenterteilung: **20.07.2011**
(21) Anmeldenummer: 09741874.3
(22) Anmeldetag: 06.05.2009
(51) Int. Cl.: F03B 13/14, H02J 3/28, F03B 13/24

(54) **WELLENKRAFTWERK UND VERFAHREN FÜR DESSEN BETRIEB**
WAVE POWER PLANT AND METHOD FOR OPERATING THE SAME
CENTRALE HOULOMOTRICE ET SON PROCÉDÉ DE FONCTIONNEMENT

(30) Priorität: 09.05.2008 DE 102008023048
(43) Veröffentlichungstag der Anmeldung: 10.11.2010
(73) Patentinhaber: Voith Patent GmbH, 89522 Heidenheim (DE)
(72) Erfinder: HÖLLE, Michael, 89555 Söhnstetten (DE); LEES, Janet, Invemess Scotland IV3 8TG (GB)
(74) Vertreter: Dr. Weitzel & Partner
(86) Internationale Anmeldenummer: PCT/EP2009/003227
(87) Internationale Veröffentlichungsnummer: WO 2009/135655

(56) Entgegenhaltungen:
- DE-A1- 2 617 023
- US-B1- 6 936 994
- CHILDS J F: "The role of converters and their control in the recovery of wave energy" 19970616, 16. Juni 1997 (1997-06-16), Seiten 3/1-3/7, XP006509670
- FOLLEY M ET AL: "Comparison of LIMPET contra-rotating wells turbine with theoretical and model test predictions" OCEAN ENGINEERING, ELMSFORD, NY, US, Bd. 33, Nr. 8-9, 1. Juni 2006 (2006-06-01), Seiten 1056-1069, XP025251542 ISSN: 0029-8018 [gefunden am 2006-06-01]
- BROOKING P R M ET AL: "Power conditioning of the output from a linear vernier hybrid permanent magnet generator for use in direct drive wave energy converters" IEE PROCEEDINGS: GENERATION, TRANSMISSION AND DISTRIBUTION, INSTITUTION OF ELECTRICAL ENGINEERS, GB, Bd. 152, Nr. 5, 9. September 2005 (2005-09-09), Seiten 673-681, XP006025183 ISSN: 1350-2360

## Beschreibung

Die Erfindung betrifft ein Wellenkraftwerk, insbesondere ein OWC-Wellenkraftwerk, sowie ein Verfahren für dessen Betrieb.

Wellenkraftwerke, die nach dem OWC-Prinzip (Oscillating Wave Column) arbeiten, sind bekannt. Beispielhaft wird auf die US 5 191 225 verwiesen. Dabei wird eine Wellenkammer verwendet, in der sich der Wasserspiegel entsprechend zum Wellentakt hebt und senkt. Hierzu besteht eine unter dem Wasserspiegel angelegte Zugangsöffnung für den Zutritt der gegen die Wellenkammer anbrandenden Wellen. Durch die Bewegung des Wasserspiegels in der Wellenkammer wird das darüber befindliche Luftvolumen periodisch Druck beaufschlagt, so dass eine oszillierende Luftströmung in einem zur Außenumgebung führenden Strömungskanal entsteht. In diesem Strömungskanal ist eine Luftturbine angeordnet, die typischerweise bidirektional anströmbar und gleichsinnig umlaufend ausgebildet ist - dabei kommt insbesondere eine Wells-Turbine in Frage.

Beim Antrieb eines elektrischen Generators durch eine bidirektional anströmbare, gleichsinnig umlaufende Luftturbine eines OWC-Wellenkraftwerks tritt die Problematik auf, dass aufgrund der Oszillation der Luftströmung in dem von der Wellenkammer ausgehenden Strömungskanal die Strömungsgeschwindigkeit im Verlauf einer Oszillationsperiode betragsmäßig stark variiert. Zusätzlich treten stochastische Schwankungen der Strömungsgeschwindigkeit auf. Dies führt insbesondere bei Betriebssituationen mit einer nicht hinreichend hohen Umlaufgeschwindigkeit der Luftturbine und einem hohen Durchflusskoeffizienten zu einem Strömungsabriss an den Turbinenblättern, der mit einem starken Leistungsabfall sowie einer hohen Geräuschentwicklung verbunden ist. Daher wurde in der voranstehend genannten US 5 191 225 vorgeschlagen, das Laufrad der Luftturbine mit einer großen Schwungmasse auszubilden. Wird ein solches Laufrad auf eine hohe Nenndrehzahl gebracht, ist es möglich, die Luftturbine permanent mit einem niedrigen Durchflusskoeffizienten zu betreiben und so einen Strömungsabriss sicher zu verhindern. Darüber hinaus findet aufgrund des hohen Trägheitsmoments des Laufrads eine Glättung der an den elektrischen Generator weitergeleiteten mechanischen Leistung statt. Nachteilig an einem schwungmassereichen Laufrad ist jedoch, dass ein solches über weite Betriebsbereiche nicht leistungsoptimal betrieben wird und hohe Ventilationsveriuste auftreten.

Ein alternativer Ansatz zum Betrieb einer Luftturbine für ein OWC-Wellenkraftwerk besteht darin, das durch den elektrischen Generator auf das Laufrad der Luftturbine aufgebrachte Bremsmoment in Abhängigkeit des gemittelten Drucks in der Wellenkammer anzupassen und darüber hinaus zum Verhindern eines Strömungsabrisses zu begrenzen. Eine solche gemittelte Einstellung des durch den elektrischen Generator aufgebrachten Bremsmoments ist insbesondere für Umrichter gespeiste elektrische Maschinen möglich. Falls das von der Luftturbine erzeugte Drehmoment das Bremsmoment des elektrischen Generators übersteigt, resultiert eine Beschleunigung des Laufrads der Luftturbine und eine damit verbundene Verringerung des Durchflusskoeffizienten. Wird die Begrenzung des Bremsmoments des elektrischen Generators an die maximal im Strömungskanal auftretenden Strömungsgeschwindigkeiten angepasst, kann das Abrissverhalten verbessert werden. Allerdings ist nachteilig, dass die Luftturbine in weiten Betriebsbereichen nicht an ihr Leistungsoptimum geführt wird.

Zur Einspeisung elektrischer Leistung von einem elektrischen Generator, der mit veränderlicher Drehzahl betrieben wird, in ein Stromnetz mit konstanter Frequenz, kann ein Frequenzumrichter mit einem integrierten Gleichspannungszwischenkreis verwendet werden. Bekannt ist eine entsprechende Netzaufschaltung von drehzahlvariablen Windkraftantagen mit Synchrongeneratoren. Dabei werden Energiespeicher verwendet, die eine gewisse Glättung der an das Stromnetz abgegebenen Leistung ermöglichen, jedoch nicht geeignet sind, die pulsierende Leistungselnspeisung eines gattungsgemäßen Wellenkraftwerks zu verhindern. Zur Netzaufschaltung wird auf den Fachartikel CHILDS J.F., "The role of converters and their control in the recovery of wave energy", 19970616, 16 Juni 1997 (1997-06-16), Seiten 3/1-3/7 verwiesen.

Der Erfindung liegt die Aufgabe zugrunde, ein Verfahren für den Betrieb eines Wellenkraftwerks anzugeben, das das Auftreten eines Strömungsabrisses an der Luftturbine weitgehend verhindert und das gleichzeitig der Luftströmung eine möglichst hohe Leistung entnimmt. Ferner ist ein Wellenkraftwerk anzugeben, das so ausgestaltet ist, dass der genannte strömungsabrissfreie und weitgehend leistungsoptimale Betrieb bei einer gleichzeitig hohen Netzverträglichkeit ermöglicht wird.

Das erfindungsgemäße Betriebsverfahren sowie ein erfindungsgemäßes Wellenkraftwerk sind durch die Merkmale der unabhängigen Ansprüche charakterisiert. Dabei haben die Erfinder erkannt, dass eine Drehzahlführung der Luftturbine in Abhängigkeit einer die Anströmungsverhältnisse charakterisierenden Größe zur strömungsabrisssicheren und leistungsoptimalen Betriebsführung realisiert werden kann, wenn der elektrische Generator über einen Gleichspannungszwischenkreis mit einem hinreichend groß dimensionierten Energiespeicher mit einem Stromnetz verbunden ist, um einen pulsierenden Leistungseintrag in das Stromnetz zu verhindern. Vorliegend wird ein bezüglich seiner Speicherkapazität und seiner Ansprechgeschwindigkeit so ausgelegter Energiespeicher mit dem Gleichspannungszwischenkreis in Verbindung gesetzt, dass die über eine Strömungs-Oszillationsperiode im Strömungskanal auftretende Schwankungsbreite der in das Stromnetz eingespeisten Leistung begrenzt und vorzugsweise ein über mehrere Strömungs-Oszillationsperioden gemittelter Leistungswert ausgegeben wird.

Durch die Zwischenschaltung eines generatorseitigen Umrichters, eines Gleichspannungszwischenkreises und eines netzseitigen Umrichters zwischen dem elektrischen Generator, der wenigstens mittelbar von der Luftturbine angetrieben wird, und dem Stromnetz, in das elektrische Leistung eingespeist wird, ist zum einen der genannte netzrückwirkungsfreie Betrieb sowie eine angepasste Blindleistungserzeugung möglich, zum anderen kann die Luftturbine über den gesamten Verlauf der jeweiligen Strömungs-Oszillationsperiode einschließlich etwaiger stochastischer Schwankungen der Anströmungsgeschwindigkeit im Bereich der leistungsoptimalen Drehzahl betrieben werden. Demnach wird die Dynamik der elektrischen Leistungserzeugung und der daraus resultierenden Rückwirkung auf den mechanischen Leistungsaufnehmer an die Dynamik des schnell variierenden pneumatischen Systems angepasst, so dass ein Betrieb möglichst nahe am optimalen Durchflusskoeffizienten möglich ist. Hierzu wird das vom elektrischen Generator aufgebrachte Bremsmoment im Verlauf der Strömungs-Oszillationsperiode variiert. Hierfür kommt eine Kennliniensteuerung oder eine Regelung in Betracht. Ferner wird für eine vorteilhafte Ausgestaltung für bestimmte Betriebsabschnitte der elektrische Generator motorisch betrieben, um die leistungsoptimale Geschwindigkeitsführung der Luftturbine zu verbessern. Für diese motorischen Betriebsabschnitte wird vorzugsweise elektrische Leistung dem Gleichspannungszwischenkreis entnommen, wobei der mit dem Gleichspannungszwischenkreis verbundene Energiespeicher der Leistungszuführung dient, so dass ein Rückgriff auf das Stromnetz verhindert oder wenigstens begrenzt wird.

Des Weiteren weist ein bevorzugt gestaltetes, erfindungsgemäßes Wellenkraftwerk eine Vorrichtung zur Drehzahlführung der Luftturbine auf, die eine die Strömung im Strömungskanal und/oder den Druck in der Wellenkammer charakterisierende Größe zur Umsetzung der Drehzahlführung verarbeitet. Hierzu können Strömungsgeschwindigkeits-Messvorrichtungen im Strömungskanal oder Drucksensoren in der Wellenkammer verwendet werden. Alternativ kann die Vorrichtung zur Drehzahlführung modellbasiert arbeiten oder eine Fusion sensorischer Daten verwenden. Zur Vereinfachung der Drehzahlführung sollte das Laufrad und die umlaufende Welle der Luftturbine ein geringes Trägheitsmoment aufweisen, so dass bevorzugt leichte Materialien, wie Aluminium, oder Hohlstrukturen aus Kompositmaterialien, beispielsweise mit Kohlenstofffasern, Verwendung finden.

Als Energiespeicher werden elektrische Energiespeicher, insbesondere Hochleistungskondensatoren (Supercaps), bevorzugt. Zusätzlich oder alternativ kann Energie in mechanischer Form zwischenspeichert werden. Ein Beispiel hierfür ist ein Schwungradspeicher oder ein Druckspeicher in einem pneumatischen oder hydraulischen System. Erfindungsgemäß wird daher der elektrische Energiespeicher mittels eines Gleichspannungswandlers mit dem Glslchspannungszwischenkreis verbunden. Hierdurch kann die Spannung im Gleichspannungszwischenkreis in einem engeren Spannungsband gehalten werden, so dass der regelungstechnische und konstruktive Aufwand für die generatorseltlgen und netzseitigen Umrichter verringert wird. Ferner ist es für eine solche Anordnung möglich, die Speicherkapazität der Hochleistungskondensatoren in einem weiteren Bereich auszunutzen, so dass sich auch speicherseitig Vereinfachungen ergeben beziehungsweise eine größere Energiereserve zur Mittelung der an das Stromnetz abgegebenen elektrischen Leistung und zur verbesserten Drehzahlführung der Luftturbine zur Verfügung steht.

Des Weiteren wird eine Steuerungsvorrichtung für ein erfindungsgemäßes Wellenkraftwrerk bevorzugt, die die sensorischen Daten zur Bestimmung der Strömungscharakteristik im Strömungskanal und/oder des Drucks in der Wellenkammer verarbeitet. Diese dient ferner der Drehzahlführung der Luftturbine und weist eine integrierte Regelungseinrichtung aufweist, die zur Regelung des generatorseltigen Umrichters und des netzseitigen Umrichters am Gleichspannungszwlschenkreis sowie der Leistungszu- und -abflüsse am Energiespeicher verwendet wird.

Nachfolgend wird die Erfindung anhand bevorzugter Ausgestaltungsbeispiele und in Verbindung mit Figurendarstellungen genauer erläutert. In diesen ist im Einzelnen Folgendes dargestellt:
- Figur 1: zeigt schematisch vereinfacht ein OWC-Wellenkraftwerk mit einer erfindungsgemäßen Vorrichtung zur Drehzahlführung der Luftturbine sowie eine Ankopplung an ein Stromnetz über einen Gleichspannungszwischenkreis mit einem Energiespeicher.
- Figur 2: zeigt eine Ausgestaltungsalternative, für die ein zusätzlicher mechanischer Energiespeicher mit dem Gleichspannungszwischenkreis in Verbindung steht.

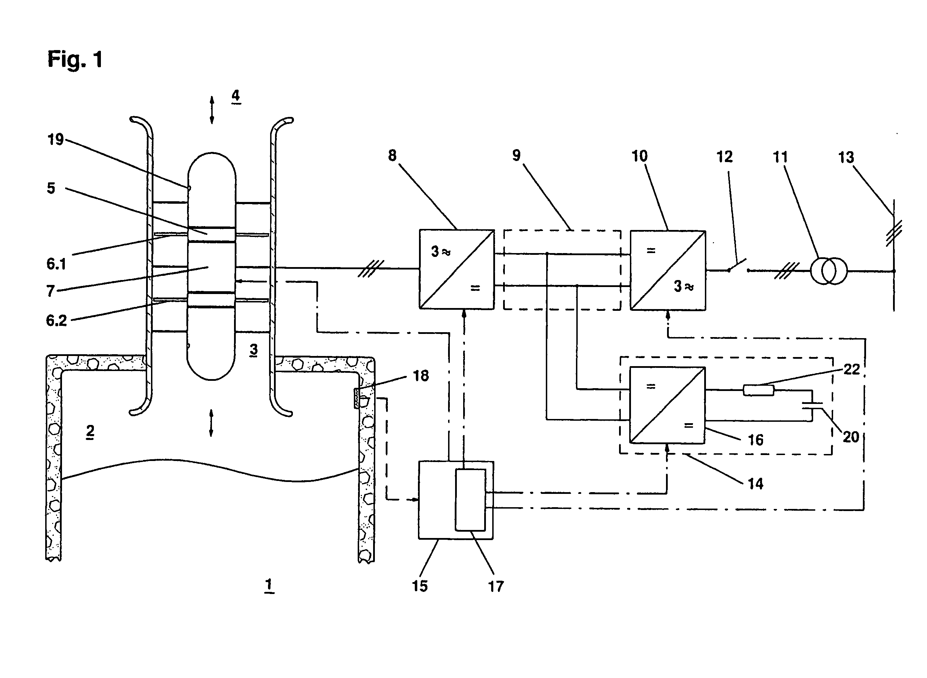

Figur 1 zeigt schematisch vereinfacht ein OWC-Wellenkraftwerk 1 mit einer Wellenkammer 2, in der ein Luftvolumen oberhalb des sich mit dem Wellentakt hebenden und senkenden Wasserspiegels eingeschlossen ist. Entsprechend der Druckschwankungen dieses Luftvolumens entsteht eine oszillierende Strömung in einem von der Wellenkammer 2 ausgehenden und zur Außenumgebung 4 führenden Strömungskanal 3. In diesem ist eine Luftturbine 5 angeordnet. Vorliegend wird eine zweistufige Wells-Turbine mit den Laufrädern 6.1, 6.2 und einem zwischen diesen angeordneten und von den Laufrädern 6.1, 6.2 angetriebenen elektrischen Generator 7 verwendet. Eine Wells-Turbine stellt ein bevorzugtes Beispiel für eine gleichsinnig umlaufende und beidseitig anströmbare Luftturbine dar. Diese umfasst Turbinenblätter, die in der Rotationsebene des jeweiligen Laufrads 6.1, 6.2 liegen und ein tropfenförmiges Profil aufweisen. Dabei sind für Wells-Turbinen aktive oder passive Blattwinkeleinstellmechanismen bekannt, die beim Betrieb ein gewisses Verdrehen der Turbinenblätter gegenüber der Rotationsebene ermöglichen.

Zur Verbesserung der erfindungsgemäß vorgesehenen Drehzahlführung für den leistungsoptimalen Betrieb der Luftturbine möglichst nahe am optimalen Durchflusskoeffizienten wird bevorzugt der umlaufende Teil der Luftturbine 5 und des elektrischen Generators 7 mit einem verringerten Trägheitsmoment ausgebildet. Hierfür kommen insbesondere Leichtbaumaterialien und Kompositstrukturen zur Realisierung einer Hohlbauweise, insbesondere für die achsfernen umlaufenden Teile in Betracht.

Entsprechend der skizzenhaften Darstellung in Figur 1 wird eine Vorrichtung zur Drehzahlführung verwendet, die die Strömung im Strömungskanal 3 charakterisierende sensorische Daten verarbeitet. Beispielhaft dargestellt ist ein Drucksensor 18 in der Wellenkammer 2 und eine Strömungsgeschwindigkeits-Messvorrichtung 19 im Strömungskanal 3. Ferner ist eine Ausgestaltung denkbar, für die Vorrichtung zur Drehzahlführung 15 die aktuellen elektrischen Leistungsdaten am elektrischen Generator 7 modellbasiert zur Beurteilung der Anströmung der Luftturbine 5 verarbeitet. Ferner ist die Verwendung indirekter Sensoren, beispielsweise akustischer Sensoren, denkbar.

Zur Anpassung der Dynamik der mechanischen Leistungsaufnahme durch die Luftturbine 5 an die Dynamik des pneumatischen Systems wird das durch den elektrischen Generator 7 erzeugte Bremsmoment im Fall einer starren Kopplung zwischen dem elektrischen Generator 7 und der Luftturbine 5 kontinuierlich im Verlauf einer Strömungs-Oszillationsperiode im Strömungskanal 3 nachgeführt. Dies kann über eine Kennliniensteuerung oder Regelung der Umrichterspeisung für den elektrischen Generator erfolgen, wobei hierfür sowohl Asynchron- als auch Synchrongeneratoren in Frage kommen. In der Figurendarstellung 1 wird diesbezüglich vereinfachend angenommen, dass der generatorseitige Umrichter 8 am Gleichspannungszwischenkreis 9 bidirektional ausgebildet ist und zur Nachführung des Bremsmoments am elektrischen Generator von der Vorrichtung zur Drehzahlführung 15 angesteuert wird.

Die Drehzahlführung der Luftturbine 5 mittels einer Nachführung des Bremsmoments des elektrischen Generators 7 setzt voraus, dass die Luftturbine bei einer Differenz zwischen dem Bremsmoment am elektrischen Generator und dem aufgenommenen mechanischen Moment am Laufrad hinreichend schnell beschleunigt oder abgebremst wird. Hierbei kann die systeminhärente Trägheit für die Drehtahlführung berücksichtigt werden.

Für eine bevorzugte Weitergestaltung kann bei einer Betriebssituation eines über einen bestimmten Schwellwert liegenden Durchflusskoeffizienten zur schnelleren Beschleunigung der Luftturbine 5 der elektrische Generator 7 motorisch betrieben werden. Für eine Asynchronmaschine als elektrischer Generator wird der generatorseitige Umrichter 8 für den Untersynchronlauf von der Vorrichtung zur Drehzahlführung 15 angesteuert. Hierzu kann ein Regler 17 vorgesehen sein, der ferner auf den netzseitigen Umrichter 10 am Gleichspahnungszwischenkreis 9 sowie auf den Energiespeicher 14 zugreift, was nachfolgend noch genauer erläutert wird.

Die leistungsoptimale Drehzahlführung der Luftturbine 5 verstärkt die pulsierende Leistungsabgabe am elektrischen Generator 7. Zugleich ist die abgegebene Spannung frequenzvariabel. Als weitere erfindungsgemäße Maßnahme ist daher ein Gleichspannungszwischenkreis 9 vorgesehen, der mit dem generatorseitigen Umrichter 8 und dem netzseitigen Umrichter 10 verbunden ist. Dabei speist der netzseitige Umrichter 10 für die vorliegende, exemplarische Gestaltung über ein Schütz 12 und einen Transformator 11 elektrische Leistung in ein Stromnetz 13 ein, die bevorzugt im Minutenbereich im Wesentlichen gemittelt wird, indem dem Gleichspannungszwischenkreis 9 ein hinreichend groß dimensionierter Energiespeicher 14 zugeordnet ist. Für die dargestellte Ausgestaltung umfasst der Energiespeicher 14 einen Hochleistungskondensator 20 (Supercap). Dabei werden mehrere seriell und/oder parallel verschaltete Hochleistungskondensatoren bevorzugt.

Ferner ist in Figur 1 skizziert, dass der Energiespeicher 14 mittels eines Gleichspannungswandlers 16 auf den Gleichspannungszwischenkreis 9 zugreift, so dass die Spannung am Hochleistungskondensator 20 und der Impedanz 22 von jener im Gleichspannungszwischenkreis 9 entkoppelt ist. Hierdurch kann zum einen die Speicherkapazität des Hochleistungskondensators 20 verbessert ausgenutzt werden und zum anderen die Schwankungsbreite der Spannung im Gleichspannungszwischenkreis 9 zur Vereinfachung des Betriebs des generatorseitigen Umrichters 8 und des netzseitigen Umrichters 10 begrenzt werden. Entsprechend werden über den Regler 17, der für die vorliegende, bevorzugte Ausgestaltung in die Vorrichtung zur Drehzahlführung 15 integriert ist, Steuer- und/oder Regelungssignale an den generatorseitigen Umrichter 8, den netzseitigen Umrichter 10 und den Gleichspannungswandler 16 des Energiespeichers 14 ausgegeben.

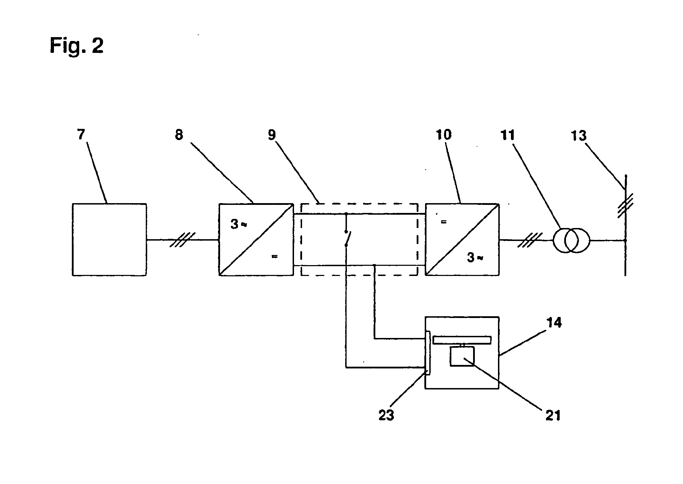

Figur 2 zeigt eine alternative Ausgestaltung für den Energiespeicher 14, wobei zusätzlich zu einem im Einzelnen nicht dargestellten elektrischen Energiespeicher ein mechanischer Energiespeicher in Form eines Schwungrads 21 vorgesehen ist. Dabei erfolgt die Steuerung beziehungsweise Regelung des Leistungsflusses vom und zum Schwungrad 21 über eine dem Energiespeicher 14 zugeordnete Steuerungsvorrichtung 23, in die die leistungselektronischen Komponenten integriert sind.

Der Energiespeicher 14 am Gleichspannungszwischenkreis 9 wird erfindungsgemäß so dimensioniert, dass die Leistungspulse der Energieerzeugung nicht an das Stromnetz 13 weitergeleitet werden. Hierunter wird verstanden, dass die Schwankungsbreite der Leistungseinspeisung im Verlauf einer Strömungs-Oszillationsperiode im Strömungskanal 3 begrenzt und ferner die typischerweise starken stochastischen Schwankungen von Oszillationsperiode zu Oszillationsperiode gemittelt werden. Dabei wird insbesondere ein Mittlung auf einer Minutenskala bewirkt, wobei bevorzugt über mehr als 2 Minuten und besonders bevorzugt über mehr als 3 Minuten gemittelt wird und zugleich der auf die Anlagennennleistung bezogene, maximale relative Leistungsgradient kleiner als 5 % gehalten wird. Dies entspricht für eine Anlagennennleistung von 20 kW für eine kleine Anlage einem maximalen Leistungsgradienten von 1 kw/s. Vorzugsweise wird ein noch kleinerer maximaler relativer Leistungsgradient von 2,5 % sichergestellt, wobei dies für eine Anlagennennleistung von 20 kW einen maximalen Leistungsgradienten von 0,5 kw/s bedeutet. Bei einer mittleren Zeitdauer einer Strömungs-Oszillationsperiode im Strömungskanal 3 im Sekundenbereich erfolgt damit eine effektive Begrenzung der Leistungsschwankungsbandbreite. Entsprechendes gilt für Wellenkraftwerke mit Großturbinen, die für eine Anlagennennleistung von rund 300 kW zur Versorgung von etwa 200 Haushalten ausgelegt sind, wobei hierzu der erfindungsgemäß verwendete Energiespeicher zu skalieren ist.

Des Weiteren wird für den Fall, dass ein motorischer Betrieb des elektrischen Generators 7 zur Geschwindigkeitsführung der Luftturbine notwendig ist, bevorzugt, die hierfür notwendige Energie aus dem Energiespeicher 14 zu entnehmen. Hierzu kann ein Energiefluss vom Gleichspannungszwischenkreis 9 über den generatorseitigen Umrichter 8 zum elektrischen Generator 7 erfolgen. Der Energiespeicher 14 erzeugt dann ein Leistungsausgleich durch einen Leistungszufluss zur Aufrechterhaltung der Nominalspannung im Gleichspannungszwischenkreis 9.

Durch das erfindungsgemäße Verfahren beziehungsweise das erfindungsgemäß gestaltete Wellenkraftwerk wird durch eine anlagenseitige Energiepufferung ein leistungsoptimierter, geschwindigkeitsgeführter Betrieb der Luftturbine ermöglicht, ohne eine unerwünschte Rückwirkung auf das mit der Anlage verbundene Stromnetz. Ausgestaltungen der Erfindung sind im Rahmen der nachfolgenden Schutzansprüche denkbar.

### Bezugszeichenliste

- 1: Wellenkraftwerk
- 2: Wellenkammer
- 3: Strömungskanal
- 4: Außenumgebung
- 5: Luftturbine
- 6.1, 6.2: Laufrad
- 7: elektrischer Generator
- 8: generatorseitiger Umrichter
- 9: Gleichspannungszwischenkreis
- 10: netzseitiger Umrichter
- 11: Transformator
- 12: Schütz
- 13: Stromnetz
- 14: Energiespeicher
- 15: Vorrichtung zur Drehzahlführung
- 16: Gleichspannungswandler
- 17: Regler
- 18: Drucksensor
- 19: Strömungsgeschwindigkeits-Messvorrichtung
- 20: Hochleistungskondensator
- 21: Schwungrad
- 22: Impedanz
- 23: Steuerungsvorrichtung

## Patentansprüche

1. Verfahren zum Betrieb eines Wellenkraftwerks (1) umfassend
1.1 eine Wellenkammer (2), die mit einem zur Außenumgebung (4) führenden Strömungskanal (3) in Verbindung steht, in dem durch die Wellenbewegung in der Wellenkammer (2) eine oszillierende Luftströmung entsteht;
1.2 eine bidirektional anströmbare, gleichsinnig umlaufende Luftturbine (5), die im Strömungskanal (3) angeordnet ist und wenigstens mittelbar einen elektrischen Generator (7) antreibt,
**dadurch gekennzeichnet, dass**
1.3 der elektrische Generator (7) über einen generatorseitigen Umrichter (6), einen Gleichspannungszwischenkreis (9) und einen netzseitigen Umrichter (10) eine über mehrere Strömungs-Oszillationsperioden im Strömungskanal (3) gemittelte elektrische Leistung an das Stromnetz (13) abgibt, wobei ein elektrischer Energiespeicher (14) mittels eines Gleichspannungswandlers (16) mit dem Gleichspannungszwischenkreis (9) verbundenen ist;
1.4 die Spannung im Gleichspannungszwischenkreis (8) durch eine Steuerung und/oder Regelung der Leistungszuflüsse und der Leistungsabflüsse zwischen einer unteren Grenzspannung und einer oberen Grenzspannung gehalten wird und
1.5 die Luftturbine (5) in Abhängigkeit einer die Strömung im Strömungskanal (3) und/oder den Druck in der Wellenkammer (2) charakterisierenden Größe drehzahlgeführt wird, wobei die Drehzahlführung kontinuierlich im Verlauf einer Strömungs-Oszillationsperiode erfolgt.

2. Verfahren nach Anspruch 1, **dadurch gekennzeichnet, dass** die Drehzahlführung der Luftturbine (5) durch eine Steuerung oder Regelung des Bremsmoments des elektrischen Generators (7) vorgenommen wird,

3. Verfahren nach einem der Ansprüche 1 oder 2, **dadurch gekennzeichnet, dass** die Drehzahlführung der Luftturbine (5) motorische Betriebsabschnitte umfasst, für die dem elektrischen Generator (7) zur Beschleunigung der Luftturbine (5) aus dem Gleichspannungszwischenkreis (9) elektrische Leistung für den motorischen Betrieb zugeführt wird, die wenigstens zum Teil durch einen Leistungsfluss vom Energiespeicher (14) zum Gleichspannungszwischenkreis (9) ausgeglichen wird.

4. Wellenkraftwerk (1) umfassend
4.1 eine Wellenkammer (2), die mit einem zur Außenumgebung führenden Strömungskanal (3) in Verbindung steht, in dem durch die Wellenbewegung in der Wellenkammer (2) eine oszillierende Luftströmung entsteht;
4.2 eine bidirektional anströmbare, gleichsinnig umlaufende Luftturbine (5), die im Strömungskanal (3) angeordnet ist und wenigstens mittelbar einen elektrischen Generator (7) antreibt,
**dadurch gekennzeichnet, dass**
4.3 zwischen dem elektrischen Generator (7) und einem Stromnetz (13) ein generatorseitiger Umrichter (8), ein Gleichspannungszwischenkreis (9) und ein netzseitiger Umrichter (10) zwischengeschaltet sind, wobei zur Abgabe einer über eine oder mehrere Strömungs-Oszillationsperioden im StrtSmungskanal (3) gemittelten elektrischen Leistung an das Stromnetz (13) ein elektrischer Energiespeicher (14) mit dem Gleichspannungszwischenkreis (9) über einen Gleichspannungswandler (16) verbundenen ist; und
4.4 eine Vorrichtung zur Drehzahlführung (15) der Luftturbine (5) vorgesehen ist, die eine die Strömung im strömungskanal (3) und/oder den Druck in der Wellenkammer (2) charakterisierende Größe zur Drehzahlführung (15) verarbeitet, wobei die Drehzahlführung kontinuierlich im Verlauf einer Strömungs-Oszillationsperiode erfolgt.

5. Wellenkraftwerk (1) nach Anspruch 4, **dadurch gekennzeichnet, dass** der Energiespeicher (14) zusätzlich ein Schwungrad (21) umfasst.

6. Wellenkraftwerk (1) nach Anspruch 4, **dadurch gekennzeichnet, dass** der Energiespeicher (14) einen Hochleistungskondensator (20) umfasst.

7. Wellenkraftwerk (1) nach einem der Ansprüche 4 - 6, **dadurch gekennzeichnet, dass** dem generatorseitigen Umrichter (8), dem netzseitigen Umrichter (10) und dem Gleichspannungswandler (16) ein Regler (17) zugeordnet ist.

## Claims

1. A method for operating a wave power plant (1) comprising:
1.1 a wave chamber (2), which communicates with a flow channel (3) leading to the external environment (4) wherein an oscillating air current is generated by the wave motion in the wave chamber (2);
1.2 an air turbine (5) rotating in a single direction and with the air flowing from both sides, wherein said turbine is arranged in the flow channel (3) and drives at least indirectly an electrical generator (7),
**characterised in that**
1.3 the electrical generator (7) supplies electrical power to the power supply system (13) averaged over a plurality of flow oscillation periods in the flow channel (3), via a converter (6) on the generator side, an intermediate DC circuit (8) and a converter (10) on the network side, wherein an electrical energy storage device (14) is connected to the intermediate DC circuit (9) by means of a DC converter (16);
1.4 the voltage in the intermediate DC circuit (8) is maintained between a lower limiting voltage and an upper limiting voltage by controlling and/or adjusting the power inputs and the power outputs and
1.5 the speed of the air turbine (5) is adjusted according to a variable characterising the flow in the flow channel (3) and/or the pressure in the wave chamber (2), whereas the rotation is speed adjusted continuously during a flow oscillation period.

2. The method of claim 1, **characterised in characterised in that** the speed of the air turbine (5) is adjusted by controlling or regulating the braking torque of the electrical generator (7).

3. A method according to any of the claims 1 to 2, **characterised in that** the speed adjustment of the air turbine (5) includes motorised operating sequences, for which electrical power is supplied from the intermediate DC circuit (9) to the electrical generator (7) for accelerating the air turbine (5) and for motorised operation, which is at least partially compensated for by a power flow from the energy storage device (14) to the intermediate DC circuit (8).

4. A wave power plant (1), including
4.1 a wave chamber (2), which communicates with a flow channel (3) leading to the external environment (4), wherein an oscillating air current is generated by the wave motion in the wave chamber (2);
4.2 an air turbine (5) rotating in a single direction and with the air flowing from both sides, wherein said turbine is arranged in the flow channel (3) and drives at least indirectly an electrical generator (7),
**characterised in that**
4.3 a rectifier (8) on the generator side, an intermediate DC circuit (9) and a rectifier (10) on the network side are interposed between the electrical generator (7) and a power supply system (13), whereas an electrical energy storage device (14) is connected to the intermediate DC circuit (9) via a DC converter (16) to supply electrical power, which is averaged over one or several flow oscillation periods in the flow channel (3), to the power supply system (13); and
4.4 a device for adjusting (15) the speed of the air turbine (5) is provided, for processing a variable characterising the flow in the flow channel (3) and/or the pressure in the wave chamber (2) for adjusting the speed of the turbine (15), whereas the rotation is speed adjusted continuously during a flow oscillation period.

5. A wave power plant according to claim 4, **characterised in** the energy storage device (14) additionally includes a flywheel (21).

6. A wave power plant according to claim 4, **characterised in** the energy storage device (14) includes a high-power capacitor (20).

7. A wave power plant (1) according to one of the claims 4 - 6, **characterised in that** a regulator (17) is dedicated to the rectifier (8) on the generator side, the rectifier (10) on the network side and the DC converter (16).

## Revendications

1. Procédé d'exploitation d'une centrale marémotrice (1) comprenant
1.1 une chambre à vagues (2), communiquant avec un canal d'écoulement (3) conduisant à l'environnement extérieur (4), canal dans lequel se produit un écoulement d'air oscillant sous l'effet du mouvement des vagues dans la chambre à vagues (2);
1.2 une turbine à air (5) tournant dans un seul sens et exposée à un écoulement bidirectionnel, disposée dans le canal d'écoulement (3) et entraînant au moins indirectement un générateur électrique (7),
**caractérisé en ce que**
1.3 le générateur électrique (7) délivre une puissance électrique au réseau électrique (13), puissance moyennée par plusieurs périodes d'oscillation d'écoulement dans le canal d'écoulement (3), laquelle puissance franchit un redresseur (6) côté générateur, un circuit intermédiaire à courant continu (8) et un redresseur (10) côté secteur, dans lequel un dispositif de stockage d'énergie électrique (14) est connecté au circuit intermédiaire à courant continu (9) par le biais d'un convertisseur de tension continue (16);
1.4 la tension dans le circuit intermédiaire à courant continu (8) est maintenue par une commande et/ou une régulation des entrées de puissance et des sorties de puissance entre une tension limite inférieure et d'une tension limite supérieure et
1.5 la vitesse de rotation de la turbine à air (5) en fonction d'une variable de caractérisation de l'écoulement dans le canal d'écoulement (3) et/ou de la pression dans la chambre à vagues (2) est réglée dans lequel la gestion de vitesse de rotation se déroule de façon continue au cours d'une période d'oscillation d'écoulement.

2. Procédé selon la revendication 1, **caractérisé en ce que** la gestion de vitesse de rotation de la turbine à air (5) est assurée par une commande ou une régulation du couple de freinage du générateur électrique (7).

3. Procédé selon l'une des revendications 1 ou 2, **caractérisé en ce que** la gestion de vitesse de rotation de la turbine à air (5) comprend des phases d'exploitation motorisées, pour lesquelles une puissance électrique provenant du circuit intermédiaire à courant continu (9) est acheminée au générateur électrique (7) pour accélérer la turbine à air (5) et pour assurer l'expoitation motorisée, puissance électrique compensée partiellement par un débit de puissance allant du dispositif de stockage d'énergie (14) au circuit intermédiaire à courant continu (8).

4. Centrale marémotrice (1) comprenant
4.1 une chambre à vagues (2), communiquant avec un canal d'écoulement (3) conduisant à l'environnement extérieur (4), canal dans lequel se produit un écoulement d'air oscillant sous l'effet du mouvement des vagues dans la chambre à vagues (2);
4.2 une turbine à air (5) tournant dans un seul sens et exposée à un écoulement bidirectionnel, disposée dans le canal d'écoulement (3)et entraînant au moins indirectement un générateur électrique (7),
**caractérisée en ce que**
4.3 un redresseur (8) côté générateur, un circuit intermédiaire à courant continu (9) et un redresseur (10) côté secteur sont interposés entre le générateur électrique (7) et un réseau électrique (13), d ans lequel un dispositif de stockage d'énergie électrique (14) est connecté au circuit intermédiaire à courant continu (9) par le biais d'un convertisseur de tension continue (16) pour délivrer au réseau électrique (13) une puissance électrique moyennée par l'intermédiaire d'une ou de plusieurs périodes d'oscillation d'écoulement dans le canal d'écoulement (3); et
4.4 un dispositif de gestion de vitesse de rotation (15) de la turbine à air (5) est prévu, pour traiter une variable de caractérisation de l'écoulement dans le canal d'écoulement (3) et/ou de la pression dans la chambre à vagues (2) et assurer la gestion de vitesse de rotation, dans lequel la gestion de vitesse de rotation se déroule de façon continue au cours d'une période d'oscillation d'écoulement.

5. Centrale marémotrice (1) selon la revendication 4, **caractérisée en ce que** le dispositif de stockage d'énergie (14) comprend encore un volant (21).

6. Centrale marémotrice (1) selon la revendication 4, **caractérisée en ce que** le dispositif de stockage d'énergie (14) comprend un condensateur haute puissance (20).

7. Centrale marémotrice (1) suivant l'une quelconque des revendications 4 - 6, **caractérisée en ce qu'**un régulateur (17) est affecté au redresseur (8) côté générateur, au redresseur (10) côté secteur et au convertisseur de tension continue (16).
